# EUROPEAN PATENT SPECIFICATION

(11) **EP 0 576 410 B1**
(45) Date of publication and mention of the grant of the patent: **08.03.2000**
(21) Application number: 93850126.9
(22) Date of filing: 11.06.1993
(51) Int. Cl.: H04M 3/24, H04L 12/26

(54) **System and method for monitoring communications links**
System und Verfahren zur Überwachung von Übertragungsstrecken
Système et procédé pour le contrôle des liaisons de communication

(30) Priority: 25.06.1992 US 904163
(43) Date of publication of application: 29.12.1993
(73) Proprietor: TELEFONAKTIEBOLAGET LM ERICSSON, 126 25 Stockholm (SE)
(72) Inventor: Dinh, Ben, Rowlett, Texas 75088 (US); Nakar, Jinen K., Richardson, Texas 75082 (US)
(74) Representative: Wideberg, Olle Sven

(56) References cited:
- EP-A- 0 439 986
- EP-A- 0 478 175
- WO-A-89/07377
- US-A- 3 576 947
- US-A- 4 298 987
- US-A- 4 792 753
- IEEE TRANSACTIONS ON CONSUMER ELECTRONICS vol. 36, no. 3 , August 1990 , NEW YORK US pages 586 - 591 XP162894 HONDA ET AL. 'Protocol analyzer for Home Bus System (HBS)'
- PATENT ABSTRACTS OF JAPAN vol. 15, no. 284 (E-1091)18 July 1991 & JP-A-03 099 552 (NIPPON TELEGRAPH & TELEPHONE CORP.) 24 April 1991
- IEEE INFOCOM 85, 26 March 1985 , WASHINGTON DC, US pages 206 - 210 DHAS ET AL. 'An architecture for an experimental measurement center for a packet switched network'

## Description

### Field of the Invention

The present invention relates to communication link monitors. More particularly, the present invention relates to telephone line monitors for multi-line arrangements.

### Description of the Related Art

There are a number of requirements and objectives for effective data communication between two directly connected transmitting-receiving stations. These requirements and objectives include frame synchronization, flow control, error control, addressing, and link management. Frame synchronization ensures that the beginning and end of each frame is clearly identifiable. Flow control ensures that the sending station does not send frames at a rate faster than the receiving station can absorb them. The purpose of error control is to ensure that bit errors introduced by the transmission system are corrected. The purpose of addressing is to ensure that the identity of the two stations involved in a transmission on a multipoint line are known. Link management provides the procedures for management of a sustained data exchange. Issues addressed by link management include the initiation, the maintenance, and the termination of the exchange.

From the above list of requirements and objectives, it should be clear that data link communication is an extremely important facet of digital data transmission. Such link communication is so important, in fact, that detection of faults or abnormal behavior in the communication has increasingly been perceived as necessary. Beyond even that, the value of pure monitoring of the communication to verify received data against specifications has come to be appreciated as extremely valuable by those skilled in the relevant art.

The above-mentioned recognition of the value and importance of a data link communications monitoring tool, together with recent rapid developments in personal computers ("PC's"), has led to PC based data link monitoring systems. Examples of such systems may be found in U.S. Patent Nos. 5,040,111, 4,937,850, 4,945,554, and 4,792,753, and European Patent Application No. 0 478 175 A1. The systems disclosed in each of these patents are discussed briefly in individual paragraphs immediately below.

U.S. Patent No. 5,040,111 to Al-Salameth et al. discloses a PC used to capture, store and archive data on a digital communications link. However, details of specific circuitry used are not set forth.

U.S. Patent No. 4,937,850 to Borbas et al. discloses a system including a central switching control center which selectively communicates with a plurality of central offices. The switching control center includes a system which may comprise a personal computer and a modem, through which the operator selectively communicates with one of the central offices. The computer and modem also provide the switching control center with the ability to receive responses from test sets at the central offices over a dial up/monitor line.

U.S. Patent No. 4,945,554 to Krause et al. discloses a test circuit arrangement for computer-controlled communications switching systems, each having a central network and a central processor unit, as well as subscriber sets and/or line sets connectable to the network for analog and/or digital information transmission. These subscriber sets and/or lin sets are in communication with the central processor unit under the control of a group processor unit adapted to the plurality of subscriber sets and/or line sets. A communications switching system to be tested is connected to a line trunk group configuration composed of subscriber and line sets, manual switching position and digital stations and is function-tested with a personal computer unit connectable via the group processor.

U.S. Patent No. 4,792,753 to Iwai discloses a local area network protocol analyzer for analyzing packets running in a coaxial cable of a local area network, which includes a code/decoder for separating a packet received from the coaxial cable into a clock signal and a serial data signal, a receive signal processing section for converting the serial data signal into parallel data, which are then stored in a receive data memory, and an output/input section for analyzing and indicating the stored parallel data.

European Patent Application No. 0 478 175 A1 to I'Anson et al. discloses a system for monitoring a communication connection process between two entities, e.g., two computers, over a data network. The system includes an analyzer for identifying protocol data units associated with the connection process, and a protocol-follower, which contains the current state of the protocol relevant to the connection process and determines whether the protocol data unit type received is valid for the current state. If the protocol data unit type is not valid for the current state, an alarm signal is generated and the violating protocol data unit along with the immediately preceding protocol data unit are displayed.

Notwithstanding developments such as those presented in the patents discussed above, there is a shortcoming and deficiency in the prior art insofar as no equipment has yet been developed that is especially well suited to monitor derived data link data communications, that is, data communications between, e.g., an AT&T SLC 96 system, and a digital class 5 switch. Not having such a piece of equipment has made it very difficult for communications engineers to analyze the information transmitted between a SLC-96 or the like, and a digital class 5 switch or the like, to detect faults or abnormal behavior, or to verify the received data against specifications.

### SUMMARY OF THE INVENTION

The present invention overcomes the shortcomings and deficiencies of the prior art by providing a system for monitoring the signalling protocol on a derived data link. The system according to the teachings of the present invention includes structure for interfacing with a derived data link signalling source so as to receive data regarding conditions therefrom, and structure for manipulating the received data to generate information for subsequent analysis and fault determination.

Accordingly, it is an object of the present invention to provide a means for monitoring the signalling protocol on a derived data link.

Another object of the present invention is to provide a system for monitoring a derived data link protocol and for displaying information received from that monitoring on a personal computer screen.

Yet another object of the present invention is to provide a system for monitoring communications links, which system includes features that can be used by testers during testing to optimize productivity and to shorten testing time.

### BRIEF DESCRIPTION OF THE DRAWINGS

Other objects, advantages and novel features of the present invention will become apparent from the following detailed description of the invention when considered in conjunction with the accompanying drawings wherein:
FIG. 1 is a block diagram of a communications system in which a derived data link monitor according to the teachings of the present invention is shown employed;
FIG. 2 is a more detailed block diagram of the derived data link monitor shown in FIG. 1;
FIGs. 3a and 3b together form a circuit diagram of a derived data link monitor according to the teachings of the present invention;
FIG. 4 is a flow chart of a computer program that may be employed in embodiments of the present invention;
FIG. 5 is an example of what the mnemonic monitoring mode could look like in an embodiment of the present invention; and
FIG. 6 is an example of what the unfiltered binary code could look like in an embodiment of the present invention.

### DETAILED DESCRIPTION OF THE INVENTION

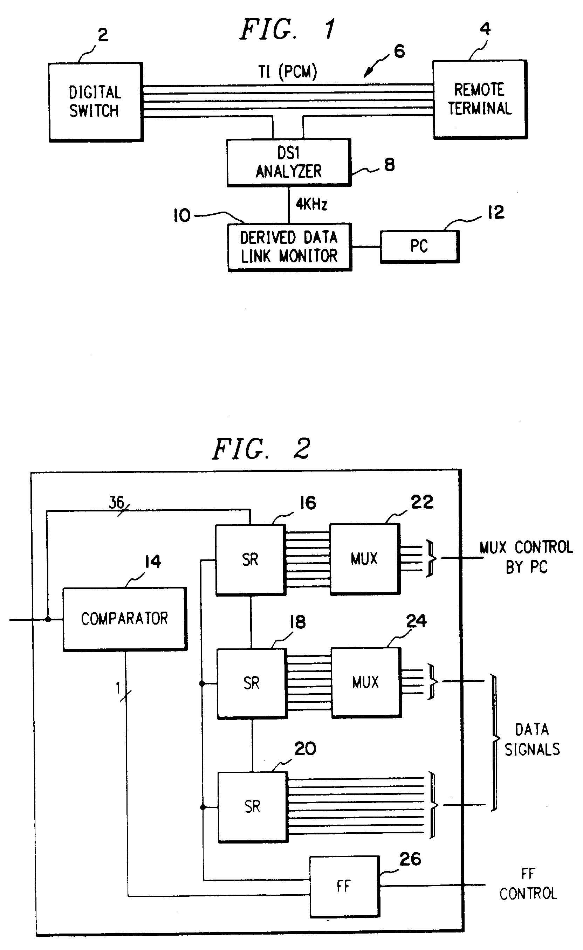

The SLC 96 system is a digital loop carrier system manufactured by AT&T. The SLC 96 system can provide service on up to 96 subscriber access lines over three to five T1 lines running between a remote terminal and a local digital switch. Referring to FIG. 1, there is shown such a system in the form of a class 5 digital switch (such as Ericsson's AXE) 2 and a SLC 96 AT&T remote terminal 4. Running between the switch 2 and the terminal 4 are five T1 lines 6.

With respect to modes of operation, the upper and lower shelf groups in a remote terminal can be independently operated in any one of three modes. Mode 1 is a non-concentrated mode where each subscriber line has a dedicated time slot. Mode 2 is a concentrated mode of operation where 96 subscribers compete for 48 time slots. Mode 3 is a non-concentrated mode that can contain coin channel unit type only.

The SLC 96 interface uses either one or two full duplex data links to convey alarm and certain call control information between the remote terminal 4 and the local digital switch 2. The A data link is carried on the A DS1 line and is always present. The C data link is carried on the C DS1 line and is only present when the Shelf Group CD is operating in Mode 2.

The details set forth in the two paragraphs immediately above and other such details are discussed at length in such publications as Bell Communications Research Technical Reference TR-TS4-000008, Issue 2, August 1986, entitled "Digital Interface Between The SLC 96 Digital Carrier Loop System and a Local Digital Switch". In any event, the characteristics of the SLC 96 and the derived data link ("DDL") are well known and understood by those skilled in the relevant art.

Mode 2 operation utilizes all of the DDL signalling, particularly the concentration field, which is the signalling channel that informs the AXE of initial off-hooks hooks at the remote terminal and by which the AXE assigns time slots to channel units in the remote terminal. Hence, this signalling protocol has more variations and can be error prone.

What has been required, and what is provided by the present invention, is a means of monitoring the signalling protocol on the DDL.

The transmission signalling of the DDL on the T1 is something akin to an extended super frame, but of a different variety. Heretofore, there has been no complete product on the market that extracts the DDL signalling and performs an analysis of the protocol.

A piece of DDL monitoring equipment according to the teachings of the present invention includes an interface circuit and a PC program designed to provide a means of monitoring the signalling protocol on the DDL. Such a piece of equipment has been made and successfully used by the inventors of the present invention. By way of example only, set forth immediately below is a detailed description of the piece of equipment made by the inventors of the present invention, which, as previously mentioned, comprises an interface circuit and a PC program.

The interface circuit which has been actually constructed is a circuit board with 13 integrated circuit ("IC") chips and a number of resistors and capacitors. It is used to compare and filter out 12 synchronization bits and convert 24 incoming data bits from serial format DDL to three groups of 8 parallel outgoing bits. A DS1 analyzer, e.g., a Tekelec 820A or the like, is used to extract the DDL signalling from the T1, and a PC circuit board (METRABYTE PI012) is used to control or read data from the interface circuit into the PC. The DS1 Analyzer provides DDL signalling at a 4Khz rate.

Referring again to FIG. 1, the DSI analyzer is shown and designated by reference numeral 8. The analyzer 8 provides signalling to a monitor according to the teachings of the present invention 10 which has an associated PC 12.

Again, purely by way of example, listed below are components used in the heretofore actually constructed embodiment of the present invention.
- 74HC164 8-Bit Serial-Input/Parallel-Output Shift Register
- 74HC688 8-Bit Equality Comparator
- 74HC595 8-Bit Serial-Input/Serial- or Parallel-Output
   Shift Register with Latched 3-State Outputs
- 74HC157 Quad 2-Input Data Selectors/Multiplexers
- 74HC4024 7-Stage Binary Ripple Counter
- 74HC74 Dual D Flip-Flop with Set and Reset
- 74HC04 Hex Inverter
- 74HC08 Quad 2-Input AND gate

With regard to structure and operation of the actually constructed embodiment of the present invention, two 74HC164's were cascaded to shift the incoming serial DDL signalling to two groups of 8-Bit parallel-output, one bit at a time. The resultant sixteen bits became inputs to two cascaded comparators (74HC688's) where they were compared to sixteen preset bits to detect synchronization. When twelve synchronization bits were detected, the output of the comparators changed state from High to Low and was used to clear the reset of the counter (a 74HC4024). The counter started to count from 1 to 24. When the counter sequence reached 24, the incoming serial DDL signalling at three cascaded shift registers (74HC595's) were shifted to provide three groups of 8-Bit parallel output. This happened because the counter output at 24 was the latch clock for the three 74HC595's. At that time the DDL signalling data was ready for the PC. The PC program scanned through the input and output ports to find the change in the acknowledgement pin. When the DDL signalling data were ready, the acknowledgement changed from High to Low and the PC program started to read data in. After finishing reading data, the PC program sent a reset signal to a control flip-flop to reset the acknowledgement. The timing period for the PC program to read data from the interface circuit was 9 ms.

Referring now to FIG. 2, there is shown a block diagram of an input circuit according to the teachings of the present invention. As previously mentioned, the incoming DDL signalling consists of thirty-six serial bits. Twelve of those bits relate to synchronisation; the remaining twenty-four bits comprise data. A comparator 14 operates to filter out the twelve synchronisation bits. The remaining twenty-four bits are fed to shift registers 16, 18, 20. Shift registers 16 and 18 have muxes 22 and 24, respectively, associated with them. The output of muxes 22 and 24, as well as the output of shift register 20, are the three groups of 8-bits mentioned in the immediately preceding paragraph. The flip-flop 26, as also mentioned in the immediately preceding paragraph, resets the acknowledgement. A counter 27 aids in this process. As further shown in FIG. 2, muxes 22 and 24 may be controlled by the associated PC 12.

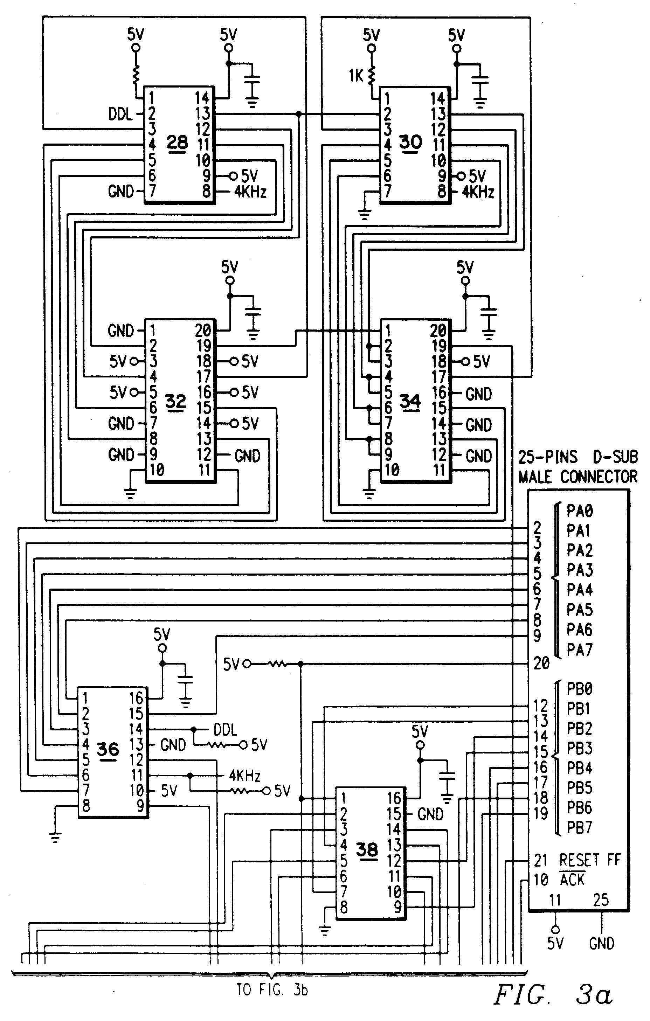

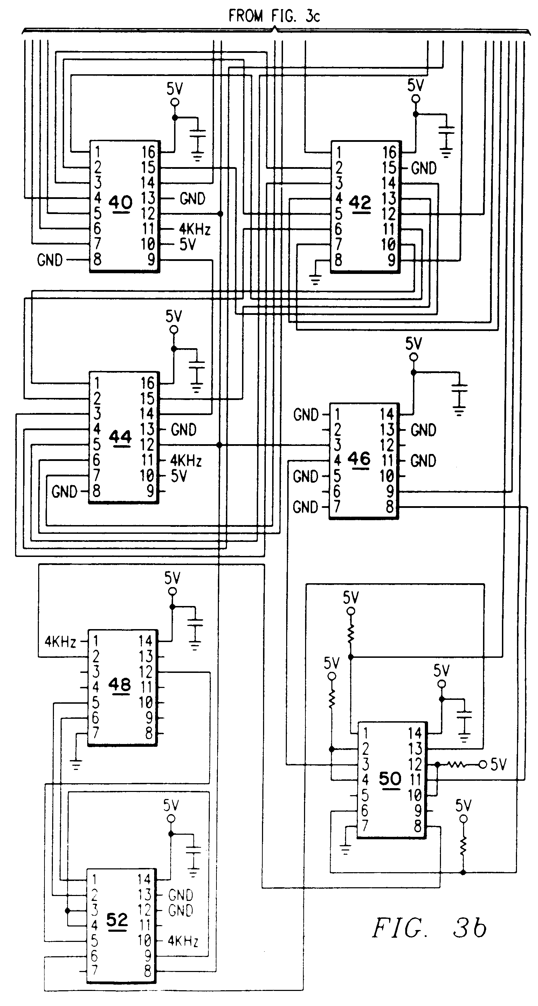

Referring now to FIG. 3 (which comprises FIGS. 3a and 3b), for the benefit of those skilled in the relevant art there is shown a detailed circuit diagram of the embodiment of the present invention which has heretofore actually been constructed and used. The reference numerals used in FIG. 3 are used to indicate components as follows:

| REFERENCE NUMERAL | DESIGNATED COMPONENT |
|---|---|
| 28 | 74HC164 |
| 30 | 74HC164 |
| 32 | 74HC688 |
| 34 | 74HC688 |
| 36 | 74HC595 |
| 38 | 74HC157 |
| 40 | 74HC595 |
| 42 | 74HC157 |
| 44 | 74HC595 |
| 46 | 74HC04 |
| 48 | 74HC4024 |
| 50 | 74HC74 |
| 52 | 74HC08 |

How each component is connected into the overall monitor is clearly shown to those skilled in the relevant art in FIG. 3. In sum, FIG. 3 depicts a Tekelec 820A-PC interface for DDL monitoring according to the teachings of the present invention.

The PC program which has been heretofore written and actually used in an embodiment of the present invention is used to analyze the DDL protocol and display all information on the PC screen in mnemonic or binary format. The program includes several features which users can use to facilitate their testing.

The DDLSIM program (that is, the Derived Data Link Simulation program) is an interactive communication program running under the operating system MS-DOS/PC-DOS version 3.0 or later. Discussed hereinbelow are functions implemented in the most current version and revision state of the DDLSIM program.

Distributed files are:
- DDLSIM.EXE (*DDLSIM program for PC*)
- ANAP.EXE (*the DDL monitoring program with a mnemonic display, data received from the remote terminal*)
- BANAP.EXE (*the DDL monitoring program with a binary display, data received from the remote terminal*)
- ANAPCOT.EXE (*the DDL monitoring program with a mnemonic display, data received from the COT*)
- BANAPCOT.EXE (*The DDL monitoring program with a binary display, data received from the COT*)
- DDLSIM.CNF (*The DDLSIM configuration file for the monitoring option*)

Features of the DDLSIM program heretofore written and used include:
- DDL monitoring with mnemonic display on screen.
- DDL monitoring with binary display on screen.
- Logging of displayed information into a log file.
- Setting of trace option to trace for some specific messages.
- Choosing filtered option to display only changes.
The filtered mode is where the data has fulfilled two out of three requirements.
- User configuration of communication parameters.
- On screen help for all functions.

The DDLSIM heretofore written and used is designed to run on IBM PC/XT/AT or true compatible personal computers with color or monochrome monitors. The operating system must be MS-DOS/PC-DOS, version 3.0 or later. The PC must be equipped with hardware for synchronous communication, e.g., METRABYTE PI012. It is configured for a base address of 360 Hex. In order to run the DDLSIM program in a proper way a free memory of at least 200 K bytes is required. As may be gathered from the distributed file list above, the DDLSIM program is an EXE-program, started with its name.

With respect to protocol configuration, all configurable parameter values are found in the DDLSIM configuration file. When the DDLSIM program begins execution, it looks for a configuration file. If no such file exists, an error message will appear on the PC's monitor screen.

Again, by way of example only, parameters for DDLSIM configuration file in the actually constructed and used embodiment of the present invention in the monitoring mode are:
- DATA LINK C: = no
- FILTERED: = no
- LOG: = no
- TRACE: = yes

### CONCENTRATOR FIELD

- ACTIVITY: = y
- ACTUPDAT: = N
- LOOPTEST: = Yes
- ASUPDREQ: = N
- IDLE: = n
- NOALARM: = y

### SWITCHING FIELD

- Idle for SField: = yes
- SWAR: = N
- SWBT: = n
- SWCT: = N
- SWDT: = N
- SWBTR: = N
- SWCTR: = N
- SWDTR: = Y

### CONCENTRATOR FIELD IN OCTAL

- 3470: = y
- 3714: = N
- 0064: = N
- 3466: = N
- 3760: = Y
- 0377: = N
- Mess1: = N
- CMess1: = N

### SWITCHING FIELD IN BINARY

- 1111: = Y
- 1110: = N
- 1101: = N
- 1100: = N
- 1010: = N
- 0101: = Y
- 0100: = N
- 0010: = N

To use the DDLSIM program, a hardware configuration needs to be set up as shown in FIG. 1. Software installation can be made by typing the command a: install. This command can install the necessary programs from the source floppy diskette into the hard-drive of a PC (e.g., PC 12). In this installation process of the actually constructed and used embodiment of the present invention a subdirectory "ANALYZER" is made. The actually constructed and used program user should change to subdirectory ANALYZER before running the DDLSIM program.

The main menu of the DDLSIM program can include one or more of the following columns: Help F1, Monitor-RT, Monitor COT, Tx-config, Monitor-config, Dos, Util.

From the main menu of the DDLSIM program, the user can access "Help" by simply pressing the F1 key. The user can move forward, backward, up or down by using the arrow keys. To execute a function the user just needs to press the enter key once. After editing the configuration files, the user can save the new configuration files by pressing the F10 key and answering Yes to save and Q to quit. To stop executing a function, a user can press any key. To stop executing the DDLSIM program, the user need simply press the F10 key.

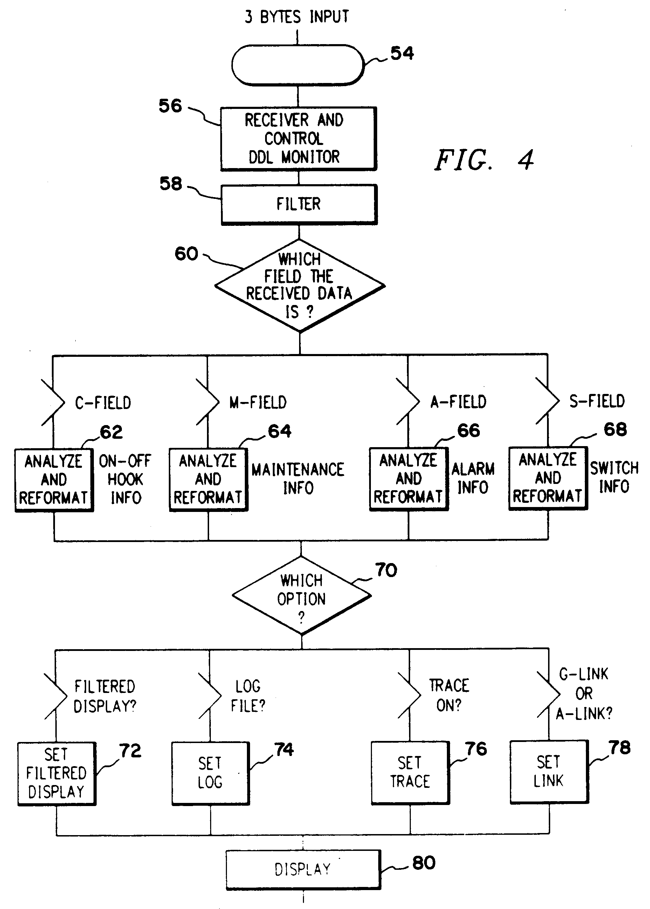

Referring now to FIG. 4, there is shown a flow chart of the logic used in the DDLSIM program. The program starts upon receipt of 3 bytes of data (step 54). Reset via the flip-flop 26 (see FIG. 2) or other control by the PC is then effected as appropriate (step 56). Filtering is then undertaken as appropriate (step 58).

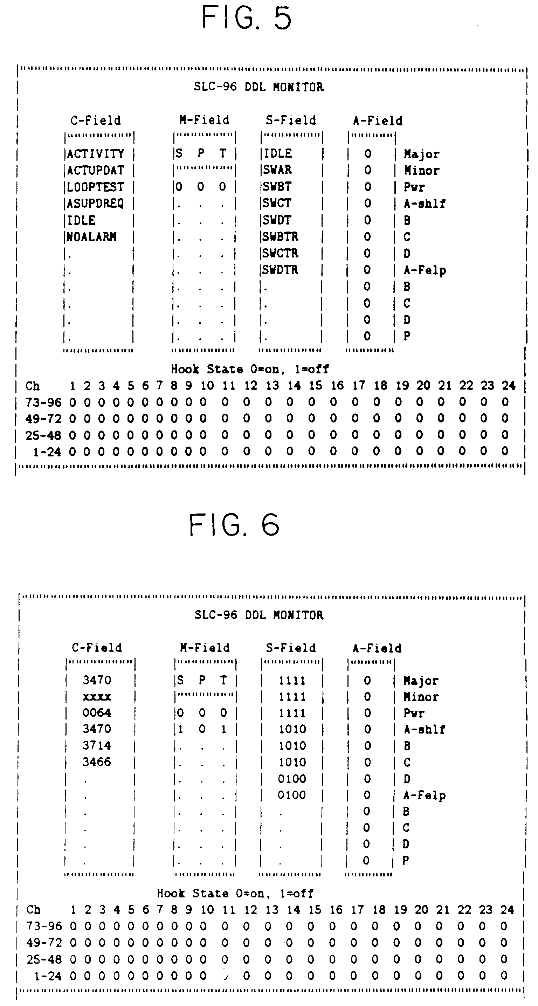

The DDLSSIM program heretofore actually constructed and used then asks which field the received data is in (step 60). The possible responses are the concentrator or "C" field, the maintenance or "M" field, the alarm or the "A" field, and the switch or "S" field. Details regarding the possible messages in each field are discussed further with respect to FIG. 5 below. In general, however, based upon the field in which the data is determined to be, analysis and reformatting is undertaken and on-off hook information (step 62), maintenance information (step 64), alarm information (step 66), or switch information (step 68), respectively, is generated.

Next, the DDLSIM program heretofore actually constructed and used queries as to which option the user desires to employ (step 70). Options include a filtered option (in which changes only are to be displayed), a log option, a trace option, and a C- or A-link option. Based upon the option selected by the user, it may be seen in FIG. 4 that the DDLSIM program sets the filtered display (step 72), sets the log (step 74), sets the trace (step 76), or sets the link (step 78). At that point, the selected display of information derived from manipulation of data from the derived data link may be displayed on the PC's monitor screen (step 80).

Referring now to FIG. 5, there is shown an example of what the mnemonic monitoring mode may look like during operation of an embodiment of the present invention.

As shown in FIG. 5, there are 6 different messages for the concentrator field or C-Field, which are:
- ACTIVITY (*When there is one or more lines active*)
- ACTUPDAT (*Activity Update*)
- LOOPTEST (*Looping Test*)
- ASUPDREQ (*Assign Update Request*)
- IDLE (*Idle*)
- NOALARM (*No Alarm*)

As also shown in FIG. 5, there are 8 different messages for the switch field or S-Field, which are:
- IDLE (*Idle*)
- SWAR (*Switch Line A Receive*)
- SWBT (*Switch Line B Transmit*)
- SWCT (*Switch Line C Transmit*)
- SWDT (*Switch Line D Transmit*)
- SWBTR (*Switch Line B Transmit and Receive*)
- SWCTR (*Switch Line C Transmit and Receive*)
- SWDTR (*Switch Line D Transmit and Receive*)

The following key may be referred to in order to understand the maintenance or M-Field:

| | Message to RT | Message From RT |
|---|---|---|
| S-bit | On-hook | Seize RC |
| P-bit | Proceed CR | Proceed RC |
| T-bit | Test ALM CR | Test ALM RC |

With respect to the alarm field or A-Field, the number 1 will appear on screen in the place of an occurred alarm. For example, if a major alarm occurred 1 will be displayed in the A-Field beside the word "Major". "Felp" means Far End Loop. As a final note on the mnemonic display, the values, except for the *A-Field values, scroll within the windows.

Referring now to FIG. 6, there is shown an example of what the unfiltered binary mode may look like in an embodiment of the present invention.

In the embodiment shown in FIG. 6, there are 8 different messages for the concentrator field or C-Field:
- xxxx (Octal) (*Mess1: When there is 1 (or more) line was active*)
- cccc (*CMess1: Complement of Mess1*)
- 3470 (*Header*)
- 3714 (*Mess2*)
- 0064 (*CMess2: Complement of Mess2*)
- 3466 (*Mess3*)
- 3760 (*Mess4*)
- 0377 (*Mess5*)

Further, there are 8 different messages for the switch or S-Field:
- 1111 (Binary) (*Idle*)
- 1110 (*Switch Line A Receive*)
- 1101 (*Switch Line B Transmit*)
- 1100 (*Switch Line C Transmit*)
- 1010 (*Switch Line D Transmit*)
- 0101 (*Switch Line B Transmit and Receive*)
- 0100 (*Switch Line C Transmit and Receive*)
- 0010 (*Switch Line D Transmit and Receive*)

Those skilled in the art should now appreciate and fully understand the structure, operation, and value of the present invention. The present invention provides equipment designed to monitor DDL data (which is transmitted between an SLC 96 and a Digital Class 5 Switch). By using the equipment provided by the present invention one can analyze transmitted information to detect faults or other abnormal behavior within a communications system and/or to verify received data against specifications.

Those skilled in the art will also recognize that many modifications and variations besides those specifically mentioned may be made in the techniques described herein without departing substantially from the concept of the present invention. Accordingly, within the scope of the appended claims, the present invention may be practiced otherwise than as specifically described herein.

## Claims

1. A system for receiving, monitoring and analyzing the information contained within a sequence of data messages transmitted over a derived data link signaling subframe of a standardized communication link (6) in which each data message is associated with indicia relating to the transmissions over said communication link (6) and contains a first predetermined number of synchronization bits followed by a second predetermined number of information bits arranged in a plurality of fields, said system being connected between an originating terminal (2 or 4) and a receiving terminal (2 or 4), and characterized in that said system comprises:
means for identifying a transmission over a signaling subframe of said standardized communication link (6) as a derived data link data message within said sequence of data messages;
means for receiving (8) data contained in said identified derived data link data message within said sequence of data messages;
means for separating (10) said identified derived data link data message into its component synchronization bits and information bits;
means for transferring said information bits of said identified derived data link data message to an input port of a computer (12);
means for interpreting said computer information bits to determine indicia related to said transmission over said communication link, said means for interpreting including means for masking or eliminating any unused information bits and means for filtering (step 58) said masked information bits into separate data words each representing a different field, said different fields including a concentrator field representing on/off hook information, a maintenance field representing maintenance information, an alarm field representing alarm information and a switching field representing switch information (steps 60-68);
means for formatting said field-separated data words in said computer for use in generating an output (steps 70-78); and
means within said computer for generating an output related to said indicia (step 80).

2. A system as recited in claim 1 wherein said received data contained in said identified derived data link data message is serial input data, and wherein said means for receiving further comprises means for receiving said serial input data into one or more shift registers (16, 18, or 20).

3. A system as recited in claim 2 wherein said means for separating further comprises:
means for detecting when all of said synchronization bits have been received into said shift registers (16, 18, or 20) in a predefined identifying sequence;
means for generating a first output signal in response to said detection;
means for counting the number of said information bits received into said shift registers (16, 18, or 20);
means responsive to the generation of said first output signal for starting said counter; and
means for generating a second output signal when the value in said counter is equal to said predetermined number of said information bits, said information bits being transferred from said shift registers (16, 18, or 20) to said input port of said computer (12) when said second output signal is generated.

4. A system as recited in claim 3 wherein the number of shift registers (16, 18, or 20) is three, and said predetermined number of said information bits is 24, and wherein said means for separating further comprises means for shifting said information bits into three groups of eight-bit parallel outputs, each of said three groups of outputs being generated by one of said three shift registers (16, 18, or 20).

5. A system as recited in claim 1 wherein said output is a diagnostic report, and wherein said means for generating an output related to said indicia further comprises:
means for selecting (steps 70-78) from a plurality of display modes for said diagnostic report; and
means for displaying (step 80) said diagnostic report in one or more of said plurality of display modes.

6. A system as recited in claim 5 wherein said plurality of display modes comprise a filtered option (step 72), a log option (step 74), a trace option (step 76), and a link option (step 78).

7. A system as recited in claim 1 wherein said first predetermined number of synchronization bits is twelve and said second predetermined number of information bits is twenty-four.

8. A method for receiving, monitoring, and analyzing the information contained within a sequence of data messages transmitted over a derived data link signaling subframe of a standardized communication link (6) connected between an originating terminal (2 or 4) and a receiving terminal (2 or 4) in which each data message is associated with indicia relating to the transmissions over said communication link (6) and contains a first predetermined number of synchronization bits followed by a second predetermined number of information bits arranged in a plurality of fields, characterized in that said method comprises the steps of:
identifying a transmission over a signaling subframe of said standardized communication link (6) as a derived data link data message within said sequence of data messages;
receiving data (8) contained in said identified derived data link data messages;
separating (10) said identified derived data link data message into its component synchronization bits and information bits;
transferring said information bits of said identified derived data link data message to an input port of a computer (12);
interpreting said computer information bits to determine indicia related to said transmission over said communication link by filtering (step 58) said information bits in said computer into separate data words by masking or eliminating any unused information bits, each said data word representing a different field, said different fields including a concentrator field representing on/off hook information, a maintenance field representing maintenance information, an alarm field representing alarm information and a switching field representing switch information (steps 60-68);
formatting said field-separated data words in said computer for use in generating an output (steps 70-78); and
generating an output related to said indicia (step 80).

9. A method as recited in claim 8 wherein said received data contained in said identified derived data link data message is serial input data, and wherein said step of receiving is performed by receiving said serial input data into one or more shift registers.

10. A method as recited in claim 9 wherein said step of separating further comprises the substeps of:
detecting when all of said synchronization bits have been received into said shift registers (16, 18, or 20) in a predefined identifying sequence;
generating a first input signal in response to said detection;
counting the number of said information bits received into said shift registers (16, 18, or 20);
in response to the generation of said first output signal, starting said step of counting; and
generating a second output signal when the value in said counter is equal to said predetermined number of said information bits, said information bits being transferred from said shift registers (16, 18, or 20) to said input port of said computer (12) when said second output signal is generated.

11. A method as recited in claim 10 wherein the number of shift registers (16, 18, or 20) is three, and said predetermined number of said information bits is 24, and wherein said step of separating further comprises the step of shifting said information bits into three groups of eight-bit parallel outputs, each of said three groups of outputs being generated by one of said three shift registers (16, 18, or 20).

12. A method as recited in claim 8 wherein said output is a diagnostic report, and wherein said step of generating further comprises the substeps of:
selecting (steps 70-78) from a plurality of display modes for said diagnostic report; and
displaying (step 80) said diagnostic report in one or more of said plurality of display modes.

13. A method a recited in claim 12 wherein said plurality of display modes comprise a filtered option (step 72), a log option (step 74), a trace option (step 76), and a link option (step 78).

14. A method as recited in claim 8 wherein said first predetermined number of synchronization bits is twelve and said second predetermined number of information bits is twenty-four.

## Patentansprüche

1. Ein System zum Empfangen, Überwachen und Analysieren der Information, die in einer Sequenz von Datennachrichten enthalten ist, die über einen abgeleiteten Datenstrecken-Signalisiervngs-Unterrahmen einer standardisierten Kommunikationsstrecke (6) übertragen werden, in der jede Datennachricht mit Zeichen assoziiert ist, die sich auf die Übertragungen über die Kommunikationsstrecke (6) beziehen, und eine erste vorgegebene Anzahl von Synchronisationsbits enthält, denen eine zweite vorgegebene Anzahl von Informationsbits folgen, die in einer Vielzahl von Feldern angeordnet sind, wobei das System zwischen ein Ursprungsterminal (2 oder 4) und ein Empfangsterminal (2 oder 4) geschaltet ist, und ***dadurch gekennzeichnet,*** daß das System umfaßt:
eine Einrichtung zum Identifizieren einer Übertragung über einen Signalisierungs-Unterrahmen der standardisierten Kommunikationsstrecke (6) als eine abgeleitete Datenstrecken-Datennachricht innerhalb der Sequenz von Datennachrichten;
eine Einrichtung zum Empfangen (8) von Daten, die in der identifizierten abgeleiteten Datenstrecken-Datennachricht innerhalb der Sequenz von Datennachrichten enthalten sind;
eine Einrichtung zum Trennen (10) der identifizierten abgeleiteten Datenstrecken-Datennachricht in ihre Komponentensynchronisationsbits und Informationsbits;
eine Einrichtung zum Transferieren der Informationsbits der identifizierten abgeleiteten Datenstrecken-Datennachricht an einen Eingangsport eines Computers (12);
eine Einrichtung zum Interpretieren der Computerinformationsbits zum Bestimmen von Zeichen, die sich auf die Übertragung über die Kommunikationsstrecke beziehen, wobei die Einrichtung zum Interpretieren einer Einrichtung zum Maskieren oder Beseitigen von irgendwelchen nicht verwendeten Informationsbits und eine Einrichtung zum Filtern (Schritt 58) der maskierten Informationsbits in getrennte Datenwörter, die jeweils ein unterschiedliches Feld darstellen, umfaßt, wobei die verschiedenen Felder ein Konzentriererfeld, das eine Auflegen/Abheben-Information darstellt, ein Wartungsfeld, das eine Wartungsinformation darstellt, ein Alarmfeld, das eine Alarminformation darstellt, und ein Vermittlungsfeld, welches Vermittlungsinformation darstellt, umfassen (Schritte 60-68);
eine Einrichtung zum Formatieren der Feld-getrennten Datenwörter in dem Computer zur Verwendung bei der Erzeugung eines Ausgangs (Schritte 70-78); und
eine Einrichtung innerhalb des Computers zum Erzeugen eines Ausgangs, der sich auf die Zeichen bezieht (Schritt 80).

2. Ein System nach Anspruch 1, *dadurch gekennzeichnet*, daß die empfangenen Daten, die in der identifizierten abgeleiteten Datenstrecken-Datennachricht enthalten sind, serielle Eingangsdaten sind und daß die Einrichtung zum Empfangen ferner eine Einrichtung zum Empfangen der seriellen Eingangsdaten in einem oder mehreren Schieberegistern (16, 18 oder 20) umfaßt.

3. Ein System nach Anspruch 2, *dadurch gekennzeichne*t, daß die Einrichtung zum Trennen ferner umfaßt:
eine Einrichtung zum Erfassen, wenn sämtliche Synchronisationsbits in dem Schieberegister (16, 18 oder 20) in einer vordefinierten Identifizierungssequenz empfangen worden sind;
eine Einrichtung zum Erzeugen eines ersten Ausgangssignals im Ansprechen auf die Erfassung;
eine Einrichtung zum Zählen der Anzahl der Informationsbits, die in den Schieberegistern (16, 18 oder 20) empfangen werden;
eine Einrichtung, die auf die Erzeugung des ersten Ausgangssignals zum Starten des Zählers anspricht; und
eine Einrichtung zum Erzeugen eines zweiten Ausgangssignals, wenn der Wert in dem Zähler gleich zu der vorgegebenen Anzahl der Informationsbits ist, wobei die Informationsbits von den Schieberegistern (16, 18 oder 20) an den Eingangsport des Computers (12) transferiert werden, wenn das zweite Ausgangssignal erzeugt wird.

4. Ein System nach Anspruch 3, *dadurch gekennzeichnet*, daß die Anzahl der Schieberegistern (16, 18 oder 20) drei ist und die vorgegebene Anzahl der Informationsbits 24 ist, und die Einrichtung zum Trennen ferner eine Einrichtung zum Verschieben der Informationsbits in drei Gruppen von acht-Bit parallelen Ausgängen umfaßt, wobei jede der drei Gruppen von Ausgängen von einem der drei Schieberegister (16, 18 oder 20) erzeugt wird.

5. Ein System nach Anspruch 1, *dadurch gekennzeichnet*, daß der Ausgang ein Diagnosereport ist, und daß die Einrichtung zum Erzeugen eines Ausgangs, der sich auf die Zeichen bezieht, ferner umfaßt:
eine Einrichtung zum Wählen (Schritte 70-78) aus einer Vielzahl von Anzeigemoden für den Diagnosereport; und
eine Einrichtung zum Anzeigen (Schritt 80) des Diagnoseberichts in einem oder mehreren der Vielzahl von Anzeigemoden.

6. Ein System nach Anspruch 5, *dadurch gekennzeichnet*, daß die Vielzahl von Anzeigemoden eine gefilterte Option (Schritt 72), eine Log-Option (Schritt 74), eine Verfolgungs-Option (Schritt 76) und eine Verbindungs-Option (Schritt 78) umfassen.

7. Ein System nach Anspruch 1, *dadurch gekennzeichnet*, daß die erste vorgegebene Anzahl von Synchronisationsbits zwölf ist und die zweite vorgegebene Anzahl von Informationsbits vierundzwanzig ist.

8. Verfahren zum Empfangen, Überwachen und Analysieren der Information, die innerhalb einer Sequenz von Datennachrichten enthalten ist, die über einen abgeleiteten Datenstrecken-Signalisierungs-Unterrahmen einer zwischen einem Ursprungsterminal (2 oder 4) und einem Empfangsterminal (2 oder 4) verbundenen standardisieren Kommunikationsstrecke übertragen werden, in der jede Datennachricht mit Zeichen assoziiert wird, die sich auf die Übertragungen über die Kommunikationsstrecke (6) beziehen, und eine erste vorgegebene Anzahl von Synchronisationsbits enthält, denen eine zweite vorgegebene Anzahl von Informationsbits folgt, die in einer Vielzahl von Feldern angeordnet sind, *dadurch gekennzeichnet*, daß das Verfahren die folgenden Schritte umfaßt:
Identifizieren einer Übertragung über einen Signalisierungs-Unterrahmen der standardisierten Kommunikationsstrecke (6) als eine abgeleitete Datenstrecken-Datennachricht innerhalb der Sequenz von Datennachrichten;
Empfangen von Daten (8), die in den identifizierten abgeleiteten Datenstrecken-Datennachrichten enthalten sind;
Trennen (10) der identifizierten abgeleiteten Datenstrecken-Datennachricht in ihre Komponentensynchronisationsbits und Informationsbits;
Transferieren der Informationsbits der identifizierten abgeleiteten Datenstrecken-Datennachricht an einen Eingangsport eines Computers (12);
Interpretieren der Computerinformationsbits zum Bestimmen von Zeichen, die sich auf die Übertragung über die Kommunikationsverbindung beziehen, durch Filtern (Schritt 58) der Informationsbits in dem Computer in getrennte Datenwörter durch Maskieren oder Beseitigen von irgendwelchen nicht verwendeten Informationsbits, wobei jedes Datenwort ein unterschiedliches Feld darstellt, wobei die unterschiedlichen Felder ein Konzentrierer-Feld, welches eine Auflegen/Abheben-Information darstellt, ein Wartungs-Feld, das eine Wartungsinformation darstellt, ein Alarmfeld, das eine Alarminformation darstellt, und ein Vermittlungsfeld, welches Vermittlungsinformation (Schritte 60-68) darstellt, umfassen;
Formatieren der Feld-getrennten Datenwörter in dem Computer zur Verwendung bei der Erzeugung eines Ausgangs (Schritte 70-78); und
Erzeugen eines Ausgangs, der sich auf die Zeichen bezieht (Schritt 80).

9. Verfahren nach Anspruch 8, *dadurch gekennzeichnet*, daß die empfangenen Daten, die in der identifizierten abgeleiteten Datenstrecken-Datennachricht enthalten sind, serielle Eingangsdaten sind, und daß der Schritt zum Empfangen durch Empfangen der seriellen Eingangsdaten in einem oder mehreren Schieberegistern ausgeführt wird.

10. Verfahren nach Anspruch 9, *dadurch gekennzeichnet*, daß der Schritt zum Trennen ferner die folgenden Unterschritte umfaßt:
Erfassen, wenn sämtliche Synchronisationsbits in den Schieberegistern (16, 18 oder 20) in einer vordefinierten Identifizierungssequenz empfangen worden sind;
Erzeugen eines ersten Eingangssignals im Ansprechen auf die Erfassung;
Zählen der Anzahl der Informationsbits, die in den Schieberegistern (16, 18 oder 20) empfangen werden;
im Ansprechen auf die Erfassung des ersten Ausgangssignals, Starten des Zählschritts; und
Erzeugen eines zweiten Ausgangssignals, wenn der Wert in dem Zähler gleich zu der vorgegebenen Anzahl der Informationsbits ist, wobei die Informationsbits von den Schieberegistern (16, 18 oder 20) an den Eingangsport des Computers (20) transferiert werden, wenn das zweite Ausgangssignal erzeugt wird.

11. Verfahren nach Anspruch 10, *dadurch gekennzeichnet*, daß die Anzahl von Schieberegistern (16, 18 oder 20) drei ist und die vorgegebene Anzahl der Informationsbits vierundzwanzig ist, und daß der Schritt zum Trennen ferner den Schritt zum Verschieben der Informationsbits in drei Gruppen von acht-Bit parallelen Ausgängen umfaßt, wobei jede der drei Gruppen von Ausgängen von einem der drei Schieberegistern (16, 18 oder 20) erzeugt wird.

12. Verfahren nach Anspruch 8, *dadurch gekennzeichnet*, daß der Ausgang ein Diagnosereport ist, und daß der Schritt zum Erzeugen ferner die folgenden Unterschritte umfaßt:
Wählen (Schritte 70-78) aus einer Vielzahl von Anzeigemoden für den Diagnosereport; und
Anzeigen (Schritt 80) des Diagnosereports in einem oder mehreren der Vielzahl von Anzeigemoden.

13. Verfahren nach Anspruch 12, *dadurch gekennzeichnet*, daß die Vielzahl von Anzeigemoden eine gefilterte Option (Schritt 72), eine Log-Option (Schritt 74), eine Verfolgungs-Option (Schritt 76) und eine Verbindungs-Option (Schritt 78) umfassen.

14. Verfahren nach Anspruch 8, *dadurch gekennzeichnet*, daß die erste vorgegebene Anzahl von Synchronisationsbits zwölf ist und die zweite vorgegebene Anzahl von Informationsbits vierundzwanzig ist.

## Revendications

1. Système pour recevoir, contrôler et analyser l'information contenue dans une séquence de messages de données transmis sur une sous-trame de signalisation de liaison de données dérivée d'une liaison de communication standardisée (6) dans laquelle chaque message de données est associé à une référence concernant les transmissions sur la liaison de communication (6) et contient un premier nombre prédéterminé de bits de synchronisation suivis par un second nombre prédéterminé de bits d'information disposés dans une pluralité de champs, ce système étant connecté entre un terminal d'émission (2 ou 4) et un terminal de réception (2 ou 4), et caractérisé en ce que ce système comprend :
des moyens pour identifier une transmission sur une sous-trame de signalisation de la liaison de communication normalisée (6) comme un message de données de liaison de données dérivée dans la séquence de messages de données;
des moyens (8) pour recevoir des données contenues dans le message de données de liaison de données dérivée identifié dans la séquence de messages de données;
des moyens (10) pour séparer le message de données de liaison de données dérivée identifié en ses bits de synchronisation et bits d'information constitutifs;
des moyens pour transférer vers un port d'entrée d'un ordinateur (12) les bits d'information du message de données de liaison de données dérivée identifié;
des moyens pour interpréter les bits d'information dans l'ordinateur pour déterminer une référence liée à la transmission sur la liaison de communication, ces moyens d'interprétation comprenant des moyens pour masquer ou éliminer des bits d'information inutilisés quelconques, et des moyens pour filtrer (étape 58) les bits d'information masqués en mots de données séparés représentant chacun un champ différent, ces différents champs comprenant un champ de concentrateur représentant une information d'état raccroché/décroché, un champ de maintenance représentant une information de maintenance, un champ d'alarme représentant une information d'alarme et un champ de commutation représentant une information de commutateur (étapes 60-68);
des moyens pour placer sous un certain format les mots de données séparés en champs dans l'ordinateur, pour l'utilisation dans la génération d'une information de sortie (étapes 70-78); et
des moyens dans l'ordinateur pour générer une information de sortie liée à ladite référence (étape 80).

2. Système selon la revendication 1, dans lequel les données reçues contenues dans le message de données de liaison de données dérivée identifié sont des données d'entrée série, et dans lequel les moyens de réception comprennent en outre des moyens pour recevoir les données d'entrée série dans un ou plusieurs registres à décalage (16, 18 ou 20).

3. Système selon la revendication 2, dans lequel les moyens de séparation comprennent en outre :
des moyens pour détecter le moment auquel tous les bits de synchronisation ont été reçus dans les registres à décalage (16, 18 ou 20) dans une séquence d'identification prédéfinie;
des moyens pour générer un premier signal de sortie en réponse à cette détection;
des moyens pour compter le nombre des bits d'information qui sont reçus dans les registres à décalage (16, 18 ou 20);
des moyens réagissant à la génération du premier signal de sortie en faisant démarrer le compteur; et
des moyens pour générer un second signal de sortie lorsque la valeur dans le compteur est égale au nombre prédéterminé de bits d'information, ces bits d'information étant transférés des registres à décalage (16, 18 ou 20) vers le port d'entrée de l'ordinateur (12) au moment auquel le second signal de sortie est généré.

4. Système selon la revendication 3, dans lequel le nombre de registres à décalage (16, 18 ou 20) est de trois, et le nombre prédéterminé des bits d'information est de 24, et dans lequel les moyens de séparation comprennent en outre des moyens pour décaler les bits d'information de façon à former trois groupes d'informations de sortie à huit bits en parallèle, chacun de ces trois groupes d'informations de sortie étant généré par l'un des trois registres à décalage (16, 18 ou 20).

5. Système selon la revendication 1, dans lequel l'information de sortie est un compte-rendu de diagnostic, et dans lequel les moyens de génération d'une information de sortie liée à ladite référence comprennent en outre :
des moyens pour effectuer une sélection (étapes 70-78) parmi une pluralité de modes de visualisation pour le compte-rendu de diagnostic; et
des moyens pour visualiser (étape 80) le compterendu de diagnostic dans un ou plusieurs modes de la pluralité de modes de visualisation.

6. Système selon la revendication 5, dans lequel la pluralité de modes de visualisation comprend une option filtrée (étape 72), une option de journal (étape 74), une option de trace (étape 76) et une option de liaison (étape 78).

7. Système selon la revendication 1, dans lequel le premier nombre prédéterminé de bits de synchronisation est de douze et le second nombre prédéterminé de bits d'information est de vingt-quatre.

8. Procédé pour recevoir, contrôler et analyser l'information contenue dans une séquence de messages de données transmis sur une sous-trame de signalisation de liaison de données dérivée d'une liaison de communication normalisée (6) connectée entre un terminal d'émission (2 ou 4) et un terminal de réception (2 ou 4), dans laquelle chaque message de données est associé à une référence concernant les transmissions sur la liaison de communication (6) et contient un premier nombre prédéterminé de bits de synchronisation suivis par un second nombre prédéterminé de bits d'information disposés dans une pluralité de champs, caractérisé en ce que ce procédé comprend les étapes suivantes :
on identifie une transmission sur une sous-trame de signalisation de la liaison de communication standardisée (6) comme étant un message de données de liaison de données dérivée dans la séquence de messages de données;
on reçoit des données (8) contenues dans les messages de données de liaison de données dérivée identifiés;
on sépare (10) le message de données de liaison de données dérivée identifié en ses bits de synchronisation et bits d'information constitutifs;
on transfère vers un port d'entrée d'un ordinateur (12) les bits d'information du message de données de liaison de données dérivée identifié;
on interprète les bits d'information dans l'ordinateur pour déterminer une référence liée à la transmission sur la liaison de communication en filtrant (étape 58) les bits d'information dans l'ordinateur en mots de données séparés, par masquage ou élimination de bits d'information inutilisés quelconques, chaque mot de données représentant un champ différent, les différents champs comprenant un champ de concentrateur représentant une information d'état raccroché/décroché, un champ de maintenance représentant une information de maintenance, un champ d'alarme représentant une information d'alarme et un champ de commutation représentant une information de commutateur (étapes 60-68);
on place sous un certain format les mots de données séparés en champs dans l'ordinateur, pour l'utilisation dans la génération d'une information de sortie (étapes 70-78); et
on génère une information de sortie liée à ladite référence (étape 80).

9. Procédé selon la revendication 8, dans lequel les données reçues contenues dans le message de données de liaison de données dérivée identifié sont des données d'entrée série, et dans lequel l'étape de réception est effectuée en recevant les données d'entrée série dans un ou plusieurs registres à décalage.

10. Procédé selon la revendication 9, dans lequel l'étape de séparation comprend en outre les sous-étapes suivantes :
on détecte le moment auquel tous les bits de synchronisation ont été reçus dans les registres à décalage (16, 18 ou 20) dans une séquence d'identification prédéfinie;
on génère un premier signal d'entrée en réponse à cette détection;
on compte le nombre des bits d'information reçus dans les registres à décalage (16, 18 ou 20);
en réponse à la génération du premier signal de sortie, on commence l'étape de comptage; et
on génère un second signal de sortie lorsque la valeur dans le compteur est égale au nombre prédéterminé des bits d'information, ces bits d'information étant transférés à partir des registres à décalage (16, 18 ou 20) vers le port d'entrée de l'ordinateur (12) lorsque le second signal de sortie est généré.

11. Procédé selon la revendication 10, dans lequel le nombre de registres à décalage (16, 18 ou 20) est de trois, et le nombre prédéterminé des bits d'information est de 24, et dans lequel l'étape de séparation comprend en outre l'étape consistant à décaler les bits d'information pour former trois groupes d'informations de sortie à huit bits en parallèle, chacun de ces trois groupes d'informations de sortie étant généré par l'un des trois registres à décalage (16, 18 ou 20).

12. Procédé selon la revendication 8, dans lequel l'information de sortie est un compte-rendu de diagnostic, et dans lequel l'étape de génération comprend en outre les sous-étapes suivantes :
on effectue une sélection (étapes 70-78) parmi une pluralité de modes de visualisation pour le compte-rendu de diagnostic; et
on visualise (étape 80) le compte-rendu de diagnostic dans un ou plusieurs modes de la pluralité de modes de visualisation.

13. Procédé selon la revendication 12, dans lequel la pluralité de modes de visualisation comprend une option filtrée (étape 72), une option de journal (étape 74), une option de trace (étape 76) et une option de liaison (étape 78).

14. Procédé selon la revendication 8, dans lequel le premier nombre prédéterminé de bits de synchronisation est de douze et le second nombre prédéterminé de bits d'information est de vingt-quatre.
